# EUROPÄISCHE PATENTSCHRIFT

(11) **EP 4 035 815 B1**
(45) Veröffentlichungstag und Bekanntmachung des Hinweises auf die Patenterteilung: **26.02.2025**
(21) Anmeldenummer: 22153823.4
(22) Anmeldetag: 28.01.2022
(51) Int. Cl.: B23F 19/00, B23F 21/20, B23C 5/00, B23F 21/00

(54) **WERKZEUG UND VERFAHREN ZUM ERZEUGEN VON HINTERLEGUNGEN AN DEN ZÄHNEN EINER VERZAHNUNG EINES ZAHNRADS**
TOOL AND METHOD FOR CREATING UNDERCUTS ON THE TEETH OF A GEAR
OUTIL ET PROCÉDÉ DE CRÉATION DES DÉPÔTS SUR LES DENTS D'UNE DENTURE D'UNE ROUE DENTÉE

(30) Priorität: 29.01.2021 DE 102021102098
(43) Veröffentlichungstag der Anmeldung: 03.08.2022
(73) Patentinhaber: Präwema Antriebstechnik GmbH, 37269 Eschwege/Werra (DE)
(72) Erfinder: SCHIEKE, Jörg, 99092 Erfurt-Marbach (DE); HOLDERBEIN, Walter, 37269 Eschwege (DE); REINHARDT, Jörg, 99826 Berka v.d.H (DE)
(74) Vertreter: Cohausz & Florack

(56) Entgegenhaltungen:
- EP-A1- 0 437 391
- EP-A1- 1 644 152
- EP-B1- 0 550 877
- DE-A1- 10 002 188
- DE-A1- 10 127 973
- DE-A1- 102011 050 499
- US-A- 2 357 088
- US-A1- 2008 240 870

## Beschreibung

Die Erfindung betrifft ein Werkzeug zum Erzeugen von Hinterlegungen an einer Innen- oder Außenverzahnung eines Zahnrads, wobei das im Gebrauch um eine Werkzeugdrehachse rotierende Werkzeug einen sich längs der Werkzeugdrehachse erstreckenden Werkzeugschaft, einen an einem Ende des Werkzeugschafts ausgebildeten Befestigungsabschnitt zum Befestigen des Werkzeugs an einem Werkzeugantrieb einer Werkzeugmaschine und mindestens eine Schneidklinge umfasst, die an einer am Umfang des Werkzeugschafts vorgesehenen Befestigungsposition angeordnet ist. Ein derartiges Werkzeug gemäß dem Oberbegriff des Anspruchs 1 ist aus dem Dokument EP 0 550 877 B1 bekannt.

Ebenso betrifft die Erfindung ein Verfahren gemäß dem Oberbegriff des Anspruchs 11 zum Erzeugen von Hinterlegungen an den Zähnen einer Verzahnung eines Zahnrads, bei dem mittels mindestens einer Schneidklinge, die am Umfang eines Werkzeugschafts eines Werkzeugs befestigt ist, das um eine längs zum Werkzeugschaft ausgerichtete Werkzeugdrehachse rotiert, spanabhebend Werkstoff von den Flanken der Zähne des um eine Werkstückdrehachse rotierenden Zahnrads abgetragen wird.

Ein Verfahren der eingangs angegebenen ist aus der EP 0 550 877 B1 bekannt. Bei diesem Verfahren wird ein relativ zum Werkstück auf einer Hypo- oder Epizykloide rotierendes Einzahnwerkzeug in die zu bearbeitende Verzahnung gestoßen. Dabei ist die jeweilige zykloidische Bewegungsbahn der Schneide des Werkzeugs so gewählt, dass der jeweils in die zu bearbeitende Verzahnung eintauchende Zykloidenast sich wenigstens angenähert mit dem Eingriffswinkel der zu bearbeitenden Verzahnung deckt. Bei der praktischen Umsetzung dieses Verfahrens kommt ein Werkzeug zum Einsatz, das einen schlanken Werkzeugschaft umfasst, an dessen Umfang zwei in Achsrichtung versetzt zueinander angeordnete Schneidklingen angeordnet sind, um gleichzeitig an der vorderen und hinteren Kante des jeweiligen Zahns der zu bearbeitenden Verzahnung eine Hinterlegung auszubilden. Der Werkzeugschaft ist dabei mit seinem einen Endabschnitt in eine Werkzeugeinspannung der jeweiligen Werkzeugmaschine eingespannt, so dass er über einen wesentlichen Teil seiner die Schneidklingen tragenden Länge frei von der Einspannung absteht. Insbesondere bei der Bearbeitung breiter Werkstücke kann es aufgrund dieser Einspannung dazu kommen, dass sich der schlanke Werkzeugschaft in Folge der auf ihn quer zur Werkzeugdrehachse wirkenden Belastungen durchbiegt. Hierdurch können insbesondere im Bereich der durch die vorderen, weiter von der Einspannung des Werkzeugs entfernten Schneidklingen erzeugten vorderen Hinterlegungen unzulässige Formabweichungen verursacht werden. Diesen Formabweichungen kann in der Praxis dadurch entgegengewirkt werden, dass für die Erzeugung der vorderen Hinterlegungen Schneidklingen verwendet werden, die durch ihre spezielle, an die jeweilige Bearbeitungsaufgabe und -situation angepasste Formgebung die im Betrieb eintretende Formabweichung des Werkzeugschafts kompensieren.

Aus der EP 1 644 152 A1 ist ein weiteres Verfahren zum Profilieren von verzahnten Werkstücken, insbesondere zum Erzeugen von Hinterlegungen oder dergleichen an Zahnflanken innen- oder außenverzahnter Werkräder, bekannt. Dazu wird das um eine Werkstückdrehachse rotierende Werkstück mittels eines um eine Werkzeugdrehachse rotierenden Schneidkantenwerkzeuges spanabhebend bearbeitet, dessen Schneidkante mit der Verzahnung des Werkstücks kämmt. Werkstück und Schneidkantenwerkzeug rotieren in einem festen Drehzahlverhältnis um ihre parallel zueinander ausgerichteten Drehachsen derart, dass die Schnittrichtung zum Zahngrund der Verzahnung hin erfolgt. In Folge einer der Drehbewegung überlagerten Kombination von Variation des Achsabstandes und Variation der Phasenlage oder der Neigung der Achslage auf einer der Profilform entsprechenden Kurve wird das Schneidkantenwerkzeug dabei verlagert. Gleichzeitig ist die durch den Achsabstand, den Flugkreis der Schneidkante und das Übersetzungsverhältnis definierte zykloidische Bewegungsbahn der Schneidkante gegenüber dem Werkstück so gewählt, dass der zulaufende Ast einer Zykloidenschleife den rücklaufenden Ast derselben Zykloidenschleife schneidet.

Vor dem Hintergrund des voranstehend erläuterten Standes der Technik hat sich die Aufgabe ergeben, mit einfachen Mitteln ein Werkzeug schaffen und ein Verfahren zu nennen, die die Erzeugung von geometrisch präzise geformten Hinterlegungen an Verzahnungen ohne die Notwendigkeit der Verwendung von speziell geformten Schneideinsätzen oder einer Veränderung von in der Praxis für die Erzeugung von Hinterlegungen bewährten Werkzeugmaschinen ermöglichen.

Zur Lösung dieser Aufgabe schlägt die Erfindung ein Werkzeug, das mindestens die in Anspruch 1 angegebenen Merkmale umfasst, und ein Verfahren vor, bei dem mindestens die in Anspruch 11 angegebenen Arbeitsschritte durchlaufen werden.

Vorteilhafte Ausgestaltungen der Erfindung sind in den abhängigen Ansprüchen angegeben und werden wie der allgemeine Erfindungsgedanke nachfolgend im Einzelnen erläutert.

Ein im Gebrauch um eine Werkzeugdrehachse rotierendes erfindungsgemäßes Werkzeug zum Erzeugen von Hinterlegungen an einer Innen- oder Außenverzahnung eines Zahnrads umfasst somit in Übereinstimmung mit dem eingangs dargelegten Stand der Technik einen sich längs der Werkzeugdrehachse erstreckenden Werkzeugschaft, einen an einem Ende des Werkzeugschafts ausgebildeten Befestigungsabschnitt zum Befestigen des Werkzeugs an einem Werkzeugantrieb einer Werkzeugmaschine und mindestens eine Schneidklinge, die an einer am Umfang des Werkzeugschafts vorgesehenen Befestigungsposition angeordnet ist.

Erfindungsgemäß nimmt nun bei einem solchen Werkzeug der in einer normal zur Werkzeugdrehachse ausgerichteten Ebene gemessene Durchmesser des Werkzeugschafts ausgehend von dem Durchmesser, den der Werkzeugschaft an der Befestigungsposition der Schneidklinge hat, in auf den Befestigungsabschnitt zu gerichteter Richtung zu.

Ein erfindungsgemäßes Werkzeug weist somit keine langgestreckte, schlanke oder stiftförmige Form mehr auf, sondern ist ausgehend zumindest von der Position, an der eine Schneidplatte an dem Werkzeugschaft befestigt ist, in Richtung des Befestigungsabschnitts verdickt. Durch diese in Richtung des Befestigungsabschnitts zunehmende Verdickung wird eine ausgehend von der Befestigungsposition in Richtung des Befestigungsabschnitts zunehmende Steifigkeit des Werkzeugschafts erzielt, die genau den Biegebelastungen entgegenwirkt, welche eintreten, wenn das Werkzeug im Gebrauch ist. Durch die erfindungsgemäße Geometrie und die damit einhergehend erzielte Massen- und Festigkeitsverteilung des Werkzeugs wird sichergestellt, dass sich das Werkzeug auch unter den im Gebrauch auftretenden Belastungen allenfalls im Rahmen zulässiger Toleranzen verformt. Im Ergebnis lässt sich so ein optimal exaktes Arbeitsergebnis bei der Erzeugung von Hinterlegungen an Zähnen der Verzahnungen eines Zahnrads gewährleisten, ohne dass dazu eine komplexe Formgebung des Werkzeugs oder eine aufwändige Maschinensteuerung erforderlich sind.

Ein besonderer Vorteil der erfindungsgemäßen Gestaltung eines Werkzeugs zur Erzeugung von Hinterlegungen besteht auch darin, dass der Durchmesser im Bereich des vorderen Abschnitts, der an die im Gebrauch freie Stirnfläche des Werkzeugs angrenzt so klein gehalten werden kann, dass eine in diesem Bereich montierte Schneidklinge auch unter den räumlich begrenzten Bedingungen, die in einer Werkzeugmaschine üblicherweise herrschen, sicher und problemfrei an die jeweilige Bearbeitungsstelle gebracht werden kann.

Dementsprechend sieht eine für die Praxis besonders relevante Ausgestaltung der Erfindung vor, dass der Abstand der Befestigungsposition der Schneidklinge zur im Gebrauch freien Stirnseite des Werkzeugschafts kleiner ist als der Abstand der Befestigungsposition zum an den Befestigungsabschnitt angrenzenden Ende des Werkzeugschafts. Dies bedeutet, dass mindestens eine Schneidklinge am Werkzeugschaft bevorzugt in enger Nachbarschaft zu der Stirnseite des Werkzeugschafts angeordnet ist, die im Gebrauch auf die zu bearbeitenden Zähne des Zahnrad-Werkstücks zu bewegt wird.

Als besonders vorteilhaft hat es sich dabei mit Blick auf die Möglichkeiten einer optimalen Positionierung der Schneidklinge in Bezug auf die Zahnflanken der Zähne des zu bearbeitenden Zahnrads erwiesen, wenn die Befestigungsposition der Schneidklinge unmittelbar angrenzt an die im Gebrauch freie Stirnseite des Werkzeugschafts. Dies kann bedeuten, dass beispielsweise ausgehend von der freien Stirnseite eine Aufnahme in den Werkzeugschaft eingeformt ist, in der die Schneidklinge so gehalten ist, dass sie in radialer Richtung seitlich über den Werkzeugschaft hinaussteht und so im Gebrauch mit dem jeweils zu bearbeitenden Zahn in Eingriff kommen kann.

Sind erfindungsgemäße Werkzeuge jeweils mit nur einer Schneidklinge ausgestattet, so können damit am jeweils bearbeiteten Zahnrad Hinterlegungen erzeugt werden, die an eine der Stirnseiten des Zahnrads angrenzen. Sollen solche Hinterlegungen auch an der gegenüberliegenden zweiten Stirnseite des Zahnrads erzeugt werden, wird dazu das Zahnrad üblicherweise gewendet und anschließend die Hinterlegungen an der bis dahin unbearbeiteten Seite der Zähne erzeugt.

Mit einem erfindungsgemäßen Werkzeug können jedoch auch in einem Durchlauf Hinterlegungen an beiden Enden der Zähne gleichzeitig erzeugt werden. Hierzu können am Umfang des Werkzeugschafts zwei Befestigungspositionen für jeweils eine Schneidklinge vorgesehen und von diesen zwei Befestigungspositionen die erste Befestigungsposition in einem Abstand zur im Gebrauch freien Stirnseite des Werkzeugschafts angeordnet sein, der kleiner ist als der Abstand der Befestigungsposition zum an den Befestigungsabschnitt angrenzenden Ende des Werkzeugschafts, insbesondere unmittelbar angrenzt an die im Gebrauch freie Stirnseite des Werkzeugschafts, während die zweite Befestigungsposition in Längsrichtung des Werkzeugschafts in Richtung auf den Befestigungsabschnitt zu beabstandet zu der ersten Befestigungsposition angeordnet ist. Der Abstand zwischen den Befestigungspositionen entspricht dabei dem Abstand, in dem die zwei Hinterlegungen an den Zähnen des bearbeiteten Zahnrads gleichzeitig erzeugt werden sollen. Dabei kann die zweite Befestigungsposition so weit entfernt von der ersten Befestigungsposition vorgesehen sein, dass sie unmittelbar angrenzt an das dem Befestigungsabschnitt zugeordnete Ende des Werkzeugschafts.

Aufgrund dessen, dass mit einem erfindungsgemäß geformten Werkzeug die Biegeverformungen, die beim Stand der Technik unzulässige Formabweichungen der erzeugten Hinterlegungen verursacht haben, vermieden werden, kann ein erfindungsgemäßes Werkzeug mit konventionell ausgebildeten Schneidklingen bestückt werden. Auf diese Weise ist eine besondere Anpassung insbesondere derjenigen Schneidklingen nicht mehr erforderlich, die an einer Befestigungsposition vorgesehen sind, die im vorderen, der im Gebrauch freien Stirnseite des Werkzeugschafts zugeordneten Bereich des Werkzeugs vorgesehen ist.

Die von einem erfindungsgemäßen Werkzeug jeweils getragenen Schneidklingen können nach Art von konventionellen Schneideinsätzen ausgebildet sein, um sie nach Verschleiß leicht austauschen zu können. Hierzu kann die jeweilige Befestigungsposition durch eine Aufnahme gebildet und die in der jeweiligen Befestigungsposition angeordnete Schneidklinge als Schneideinsatz ausgebildet sein, der mit einem Halteabschnitt in der Aufnahme gehalten ist, während ein Klingenabschnitt des Schneideinsatzes in radialer Richtung über den Umfang des Werkzeugschafts hinaussteht.

Es ist möglich, die erfindungsgemäß vorgesehene Zunahme des Durchmessers des Werkzeugschafts exakt an die im Gebrauch tatsächlich auftretenden Biegebelastungen anzupassen, indem beispielsweise die betreffenden Biegebelastungen in einem praktischen Versuch erfasst und daraus der im Hinblick auf die angestrebte Aussteifung des Werkzeugschafts optimale Dickenverlauf des Werkzeugschafts abgeleitet werden.

Ein optimaler Verformungswiderstand kann dadurch erzielt werden, dass der Durchmesser des Werkzeugschafts ausgehend von der Befestigungsposition der Schneidklinge in Richtung des dem Befestigungsabschnitt zugeordneten Endes des Werkzeugschaftes kontinuierlich zunimmt. Durch eine derartige kontinuierliche Dickenzunahme lassen sich Belastungssprünge und damit einhergehende Spannungen im Werkzeug vermeiden, die zu einem vorzeitigen Versagen des Werkzeugs führen könnten.

Eine hierauf aufsetzende, besonders praxisgerechte Gestaltung eines erfindungsgemäßen Werkzeugs ergibt sich dabei dann, wenn der Werkzeugschaft zumindest abschnittsweise nach Art eines Kegels oder eines Kegelstumpfes geformt ist. Praktische Versuche haben ergeben, dass ein solcherart geformtes Bauteil nicht nur besonders einfach hergestellt werden kann, sondern auch eine optimierte Formsteifigkeit unter den sich in der Praxis ergebenden Belastungen gewährleistet. So hat sich gezeigt, dass durch eine kegelstumpfe oder kegelige Formgebung des Werkzeugschafts Verbiegungen des Werkzeugs stets so sicher vermeiden lassen, dass die sich in der Praxis ergebenden Anforderungen an die Fertigungsgenauigkeit zuverlässig erfüllt werden können. Das derart ausgestaltete Werkzeug weist eine konisch zulaufende Umfangsfläche auf, die mit der Drehachse des Werkzeugs einen Winkel einschließt, der dem Winkel zwischen der Werkzeug- und Werkstückdrehachse entspricht.

Der besondere Vorteil des erfindungsgemäßen Werkzeugs besteht auch darin, dass sich der Werkzeugschaft auf einfache Weise als massiver Körper fertigen lässt. Hierzu eignen sich insbesondere die dazu im Stand der Technik bereits bewährten Stahlwerkstoffe.

Den voranstehenden Erläuterungen entsprechend wird bei einem erfindungsgemäßen Verfahren zum Erzeugen von Hinterlegungen an den Zähnen einer Verzahnung eines Zahnrads mittels mindestens einer Schneidklinge, die am Umfang eines Werkzeugschafts eines Werkzeugs befestigt ist, das um eine längs zum Werkzeugschaft ausgerichtete Werkzeugdrehachse rotiert, spanabhebend Werkstoff von den Flanken der Zähne des um eine Werkstückdrehachse rotierenden Zahnrads abgetragen.

Erfindungsgemäß kommt dabei für die spanabhebende Erzeugung der Hinterlegung ein erfindungsgemäß gestaltetes Werkzeug zum Einsatz. Dessen Werkzeugdrehachse wird erfindungsgemäß in Bezug auf die Werkstückdrehachse unter einem Winkel ausgerichtet ist, der größer als 0° ist.

Beim erfindungsgemäßen Verfahren wird somit dem erfindungsgemäß vorgesehenen Dickenverlauf des jeweils zum Einsatz kommenden Werkzeugs dadurch Rechnung getragen, dass die Werkzeugachse und die Werkstückachse bei der Erzeugung der Hinterlegungen schräg zueinander ausgerichtet werden. Durch die winklige Ausrichtung der Werkzeugdrehachse in Bezug auf die Werkstückdrehachse wird kompensiert, dass die Schneidkante der Schneidklinge beim erfindungsgemäßen Werkzeug in Bezug auf die Werkzeugdrehachse unter dem Winkel β ausgerichtet ist.

Im besonders praxisgerechten Fall, dass die Schneidkante der Schneidklinge des erfindungsgemäßen Werkzeugs parallel zur Umhüllenden des Werkstückschafts ausgerichtet ist, ist dabei vorzugsweise der Winkel, unter dem sich die Werkstückdrehachse und die Werkzeugdrehachse schneiden, gleich dem Winkel, den die Mantellinie, welche die Umhüllende bestimmt, mit der Drehachse des Werkzeugs einschließt. Als "Umhüllende" wird hier dabei die Kegelfläche bezeichnet, die sich dadurch erzeugen lässt, dass eine an den Werkzeugschaft angelegte gerade Mantellinie um die Werkzeugdrehachse rotiert wird.

In diesem Fall weist also die Schneidklinge eine mindestens abschnittsweise geradlinig ausgebildete Schneidkante auf, die parallel zur Mantellinie ausgerichtet ist, die die den Werkzeugschaft Umhüllende erzeugt, wobei der Winkel Σ derart eingestellt ist, dass der geradlinige Abschnitt der Schneidkante im Moment der Begegnung mit dem jeweils zu bearbeitenden Zahn parallel zur Kopffläche des betreffenden Zahns des Zahnrads ausgerichtet ist.

Bei der erfindungsgemäßen Erzeugung von Hinterlegungen treffen sich somit die Drehachsen von Werkzeug und Werkstück unter einem Achskreuzwinkel, wie er beispielsweise auch vom Wälzschälen und verwandten Verfahren bekannt ist. Durch die in Bezug zueinander winklige Anordnung der Drehachsen wird ermöglicht, dass das Werkzeug trotz des in Richtung seines mit dem Werkzeugdrehantrieb der jeweiligen Werkzeugmaschine verkoppelten Befestigungsabschnitts größer werdenden Durchmessers kollisionsfrei so weit an die Zähne des zu bearbeitenden Zahnrads angenähert werden kann, dass die mindestens eine Schneidklinge den von ihr spanabhebend jeweils zu bearbeitenden Zahn erreicht.

Für die Praxis hat sich eine Formgebung des Werkzeugschafts eines erfindungsgemäßen Werkzeugs bewährt, bei dem sich zwischen der Mantellinie des Werkzeugschafts und der Werkzeugdrehachse und damit einhergehend bei der Ausführung des erfindungsgemäßen Verfahrens auch zwischen der Werkzeugdrehachse und der Werkstückdrehachse ein Winkel β von 4° bis 16° ergibt.

Eine besonders praxisgerechte Ausgestaltung des erfindungsgemäßen Verfahrens ergibt sich dabei dann, wenn die Schneidklinge eine mindestens abschnittsweise geradlinig ausgebildete Schneidkante aufweist, die parallel zu einer den Werkzeugschaft einhüllenden Mantelfläche ausgerichtet ist, wobei der Winkel β derart eingestellt ist, dass der geradlinige Abschnitt der Schneidkante im Moment der Begegnung mit dem jeweils zu bearbeitenden Zahn parallel zur Kopffläche des betreffenden Zahns des Zahnrads ausgerichtet ist.

Das erfindungsgemäße Werkzeug und das erfindungsgemäße Verfahren bedingen bis auf die Maßgabe der erfindungsgemäß zueinander winkligen Ausrichtung der der Drehachsen von Werkzeug und Werkstück keine besonderen Anforderungen an die verfahrensmäßige Durchführung der Erzeugung von Hinterlegungen am jeweils bearbeiteten Zahnrad. So kann das Verhältnis der Drehzahlen von Werkzeug und Werkstück für die Bearbeitung in bekannter Weise so eingestellt werden, dass in einem Bearbeitungsdurchlauf sämtliche Zähne des Zahnrades bearbeitet werden. Hierzu können die Drehzahlen so gewählt werden, dass sie keinen gemeinsamen Teiler aufweisen. Dabei kann die Geometrie des Werkzeugs in Bezug auf die Geometrie des zu bearbeitenden Zahnrads so gewählt werden, dass die Flugbahn der Schneidkanten der jeweiligen Schneidklinge des Werkzeugs eine "offene" oder eine "geschlossene zykloidische" Bewegungsbahn beschreiben.

Nachfolgend wird die Erfindung anhand einer ein Ausführungsbeispiel darstellenden Zeichnung näher erläutert. Es zeigen jeweils schematisch:
- Fig. 1: ein Werkzeug beim Erzeugen von Hinterlegungen an den Zähnen eines außenverzahnten Zahnrads in einer seitlichen Ansicht;
- Fig. 2: das Werkzeug gemäß Fig. 1 in einer frontalen Ansicht;
- Fig. 3: das Werkzeug gemäß den Figuren 1 und 2 in einer perspektivischen Ansicht von hinten;
- Fig. 4: eine alternative Ausgestaltung eines Werkzeugs zum Erzeugen von Hinterlegungen in seitlicher Ansicht.

Das Werkzeug 1 zum Erzeugen von Hinterlegungen H an der Außenverzahnung A eines Zahnrads ZR rotiert im Gebrauch um eine Werkzeugdrehachse W.

Dabei umfasst das Werkzeug 1 einen sich längs der Werkzeugdrehachse W erstreckenden Werkzeugschaft 4, an dessen einem Ende 5 ein konventionell ausgebildeter Befestigungsabschnitt 6 zum Befestigen des Werkzeugs 1 an einer Einspannung eines hier der Übersichtlichkeit nicht dargestellten Werkzeugantriebs einer ebenso nicht gezeigten Werkzeugmaschine angeformt ist. Der Werkzeugschaft 4 und der Befestigungsabschnitt 5 sind aus einem Stück massiv aus einem für die Herstellung von Werkzeugen der hier in Rede stehenden Art im Stand der Technik bewährten Werkzeugstahl gefertigt.

An seinem zum Befestigungsabschnitt 6 gegenüberliegenden, im Gebrauch frei von der Einspannung des Werkzeugantriebs abstehenden Ende weist der Werkzeugschaft 4 eine Stirnseite 7 auf, die eine kreisförmige Grundform mit einem Durchmesser D1 besitzt. Ausgehend von der Stirnseite 7 nimmt der Durchmesser D des Werkzeugschafts 4 in Richtung der zur Werkzeugdrehachse W parallel sich erstreckenden Längsrichtung L des Werkzeugschafts 4 kontinuierlich zu, bis das dem Befestigungsabschnitt 6 zugeordnete Ende 5 des Werkzeugschafts 4 erreicht ist, an dem der Durchmesser D seinen größten Wert D2 hat.

Der Werkzeugschaft 4 hat auf diese Weise die Form eines Kegelstumpfes, dessen Umfangsfläche 8 durch Rotation einer geraden Mantellinie M um die Werkzeugdrehachse W abgebildet wird und somit ausgehend von seiner dicksten, an den Befestigungsabschnitt 6 angrenzenden Stelle konisch in Richtung der im Gebrauch freien Stirnseite 7 des Werkzeugschafts 4 zuläuft.

Die Mantellinie M ist dabei gegenüber der Werkzeugdrehachse W um einen Winkel β von beispielsweise 5° geneigt.

Ausgehend von der Stirnseite 7 ist in den Werkzeugschaft 4 eine zur Umfangsfläche 8 hin seitlich geöffnete Aufnahme 9 eingeformt, in der ein konventionell ausgebildeter Schneidklingeneinsatz 10 mit seinem Halteabschnitt sitzt. Der Halteabschnitt des Schneidklingeneinsatzes 10 trägt eine Schneidklinge 11, die in radialer Richtung R frei über die Umfangsfläche 8 des Werkzeugschafts 4 hinaussteht. Die Schneidklinge 11 ist auf diese Weise an einer Befestigungsposition B1 gehalten, die unmittelbar angrenzt an die im Gebrauch freie Stirnseite 7 des Werkzeugschafts 4 und somit den größtmöglichen Abstand S zum an den Befestigungsabschnitt 7 angrenzenden Ende 5 des Werkzeugschafts 4 hat. Die Schneidklinge 11 weist dabei eine geradlinig ausgebildete Schneidkante 12 auf, die sich im hier beschriebenen Beispiel parallel zur Umfangsfläche 8 des Werkzeugschafts 4 erstreckt.

Im Gebrauch rotiert das Zahnrad ZR im Gleichlauf mit dem Werkzeug 1 um eine Werkzeugdrehachse W. Das Drehzahlverhältnis R1/R2 der Drehzahl R1, mit der das Werkzeug 1 um die Werkzeugdrehachse W rotiert, zur Drehzahl R2, mit der das Werkstück (Zahnrad ZR) um seine Werkstückdrehachse X rotiert, ist dabei so gewählt, dass beide Drehzahlen R1,R2 keinen gemeinsamen Teiler aufweisen. Auf diese Weise wird in bekannter Weise erreicht, dass alle Zähne Z des Zahnrads ZR nach einer ausreichenden Anzahl von Umläufen gleichmäßig bearbeitet sind.

Zum Erzeugen der Hinterlegungen H an den Zähnen Z der Außenverzahnung A des Zahnrads ZR wird das Werkzeug 1 mit seiner Werkzeugdrehachse W in Bezug auf eine Werkstückdrehachse X dabei so positioniert, dass zwischen der Werkstückdrehachse X und der Werkzeugdrehachse W ein Achskreuzwinkel Σ eingeschlossen ist, der beispielsweise gleich dem Winkel β ist, um den die die Umfangsfläche 8 des konischen Werkzeugschafts 4 abbildende Mantellinie M in Bezug auf die Werkzeugdrehachse W ausgerichtet ist.

Auf diese Weise ist die Umfangsfläche 8 des Werkzeugschafts 4 an der Stelle ihrer größten Annäherung an die Werkstückdrehachse X parallel zu der Werkstückdrehachse X ausgerichtet. Damit einhergehend ist auch die Schneidkante 12 der Schneidklinge 11 im Moment des Eingriffs in den jeweils zu bearbeitenden Zahn Z parallel zu dessen Kopffläche K und damit einhergehend parallel zur Werkstückdrehachse X ausgerichtet.

Auf diese Weise wird trotz der Konizität des Werkzeugschafts 4 und der zur Umfangsfläche 8 des Werkzeugschafts 4 parallel ausgerichteten Schneidkante 12 der Schneidklinge 11 bei der spanabhebenden, durch die Schneidklinge 11 vorgenommenen Erzeugung der Hinterlegungen H an den Zähnen Z des Zahnrads ZR ein Schnittbild erzeugt, das dem entspricht, welches entsteht, wenn mit einem schlanken, aber verformungsanfälligen Werkzeug der eingangs erwähnten, in der EP 0 550 877 B1 beschriebenen Art Hinterlegungen in die Zähne eines Zahnrads eingebracht werden.

Im Unterschied zum Stand der Technik, bei dem schlanke Werkzeuge eingesetzt werden müssen, um den Ort zu erreichen, an dem die jeweilige Hinterlegung erzeugt werden soll, ist beim erfindungsgemäßen Werkzeug 1 die Gefahr einer Biegeverformung längs seiner Werkzeugdrehachse W dadurch minimiert, dass der Werkzeugschaft 4 aufgrund seiner ausgehend von der Befestigungsposition B1 in Richtung des Befestigungsabschnitts 6 zunehmenden Dicke den Kräften, die während des Eingriffs der Schneidklinge 11 in das Material der Zähne Z des Zahnrads ZR auftreten und quer zur Werkzeugdrehachse W ausgerichtet sind, einen hohen Verformungswiderstand entgegensetzen.

Im Ergebnis wird so eine hochpräzise Fertigung der Hinterlegungen H an dem Zahnrad ZR auch dann ermöglicht, wenn die Befestigungsposition B1 für die Schneidklinge 11 weit frei auskragend gegenüber dem Befestigungsabschnitt 6 gewählt ist, mit dem das Werkzeug 1 im Gebrauch in der Werkzeugaufnahme der jeweiligen Werkzeugmaschine gehalten ist.

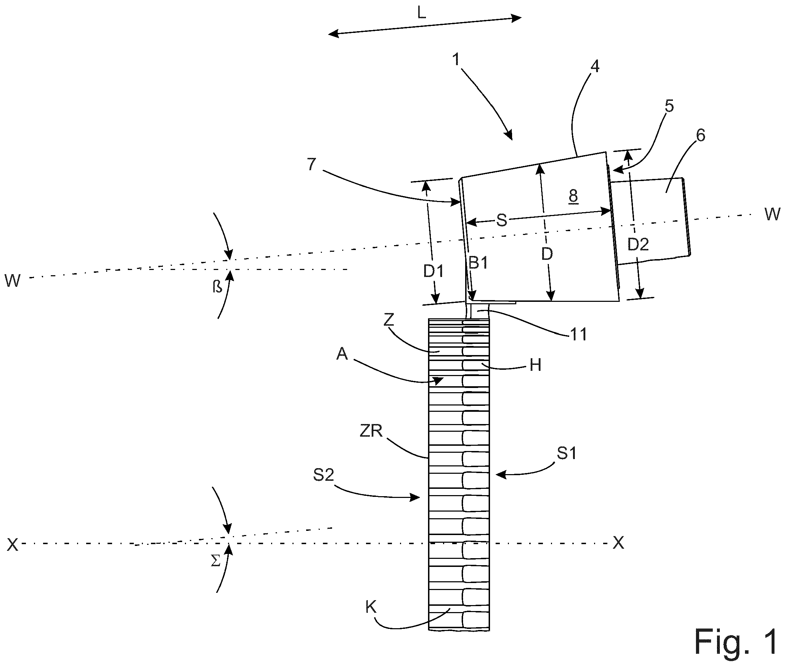

Sollen mit dem Werkzeug 1 an dem Zahnrad ZR Hinterlegungen H nicht nur an den Endabschnitten der Zähne Z erzeugt werden, die der einen Stirnseite S1 des Zahnrads ZR zugeordnet sind, sondern auch an den an die gegenüberliegende Stirnseite S2 angrenzenden Endabschnitten, so kann hierzu bei der in Fig. 1 dargestellten Ausgestaltung das Werkzeug 1 um eine Vertikalachse V gewendet werden, sobald die Erzeugung der an die erste Stirnseite S1 angrenzenden Hinterlegungen H abgeschlossen ist, und ein weiterer Bearbeitungsdurchlauf mit dem Werkzeug 1 absolviert werden.

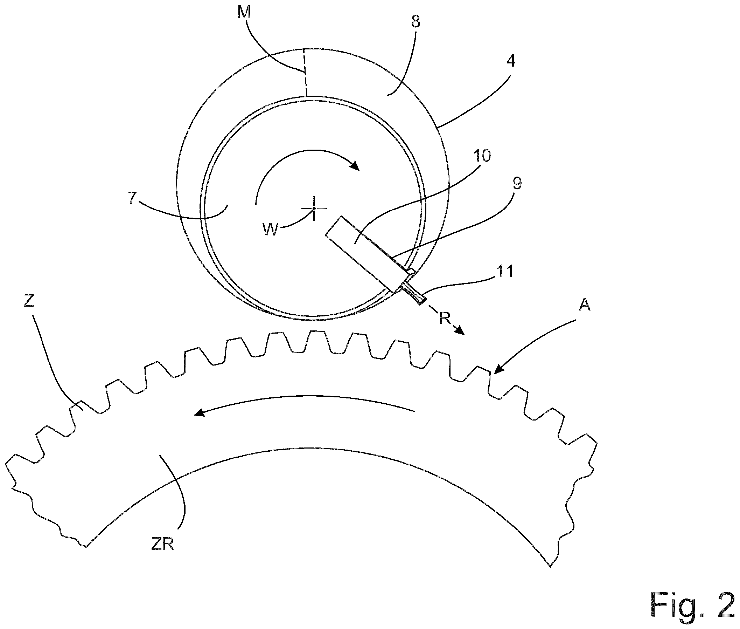

In Fig. 2 ist ein Beispiel für ein Werkzeug 101 gezeigt, das die gleichzeitige Erzeugung von Hinterlegungen H1,H2 an den Stirnseiten S1,S2 des zu bearbeitenden Zahnrads ZR ermöglicht.

Hierzu weist das Werkzeug 101 einen Werkzeugschaft 104 und einen Befestigungsabschnitt 106 auf, die einstückig als massiver Körper in der für das Werkzeug 1 voranstehend beschriebenen Weise geformt sind.

Wie beim Werkzeug 1 ist auch beim Werkzeug 101 in dessen im Gebrauch freie Stirnseite 107 eine Aufnahme eingeformt, die, wie die Aufnahme 9 des Werkzeugs 1, in radialer Richtung R zur Umfangsfläche 108 des Werkzeugs 101 hin geöffnet ist. In der Aufnahme sitzt ein konventionell geformter erster Schneidklingeneinsatz 110. Die Schneidklinge 111 des Schneidklingeneinsatzes 110 befindet sich beim Werkzeug 101 an derselben Befestigungsposition B1 wie die Schneidklinge 11 beim Werkzeug 1. Dabei ist auch hier die Schneidkante der Schneidklinge 111 parallel zur Drehachse W des Werkzeugs 101 ausgerichtet.

Zusätzlich ist beim Werkzeug 101 eine zweite Schneidklinge 113 vorgesehen. Hierzu ist an einer Befestigungsposition B2, die etwa in der Mitte der Längserstreckung des Werkzeugschafts 104 vorgesehen ist, in die Umfangsfläche 108 des Werkzeugs 101 eine Aufnahme eingeformt, in der ein Schneidklingeneinsatz 114 sitzt. Der Schneidklingeneinsatz 114 trägt wie die der Schneidklingeneinsätze 10 und 110 die in radialer Richtung R über die Umfangsfläche 108 des konisch geformten Werkzeugschafts 104 hinausstehende zweite Schneidklinge 113.

Für die Bearbeitung des Zahnrads ZR wird das Werkzeug 101 wie das Werkzeug 1 mit seiner Drehachse W in Bezug auf die Drehachse X des im Gleichlauf mit dem Werkzeug 101 rotierenden Zahnrads ZR unter dem Achskreuzwinkel Σ ausgerichtet und so positioniert, dass die Schneidklingen 110 und 113 in Eingriff mit dem jeweils zu bearbeitenden Zahn Z kommen. Auch hier stellt die konische, ausgehend von der im Gebrauch freien Stirnseite 107 in ihrer Dicke zunehmende Form des Werkzeugschafts 104 sicher, dass während der Bearbeitung trotz der dabei auftretenden Querbelastungen des Werkzeugs 101 keine Verformungen des Werkzeugs 101 eintreten, die die Präzision des Bearbeitungsergebnisses beeinträchtigen könnten.

### BEZUGSZEICHEN

- 1: Werkzeug zum Erzeugen der Hinterlegungen H
- 4: Werkzeugschaft
- 5: dem Befestigungsabschnitt 6 zugeordnetes Ende des Werkzeugschafts 4
- 6: Befestigungsabschnitt
- 7: im Gebrauch freie Stirnseite 7 des Werkzeugschafts 4
- 8: Umfangsfläche des Werkzeugschafts 4
- 9: Aufnahme
- 10: Schneidklingeneinsatz
- 11: Schneidklinge des Schneidklingeneinsatzes 10
- 12: Schneidkante der Schneidklinge 11
- 101: Werkzeug zum gleichzeitigen Erzeugung von Hinterlegungen H1,H2
- 104: Werkzeugschaft
- 105: dem Befestigungsabschnitt 106 zugeordnetes Ende des Werkzeugschafts 104
- 106: Befestigungsabschnitt
- 107: im Gebrauch freie Stirnseite des Werkzeugschafts 104
- 108: Umfangsfläche des Werkzeugs 101
- 110: Schneidklingeneinsatz
- 111: Schneidklinge des Schneidklingeneinsatzes 110
- 113: zweite Schneidklinge
- 114: zweiter Schneidklingeneinsatz

- β: Neigungswinkel der Mantellinie M gegenüber der Werkzeugdrehachse W
- Σ: Achskreuzwinkel

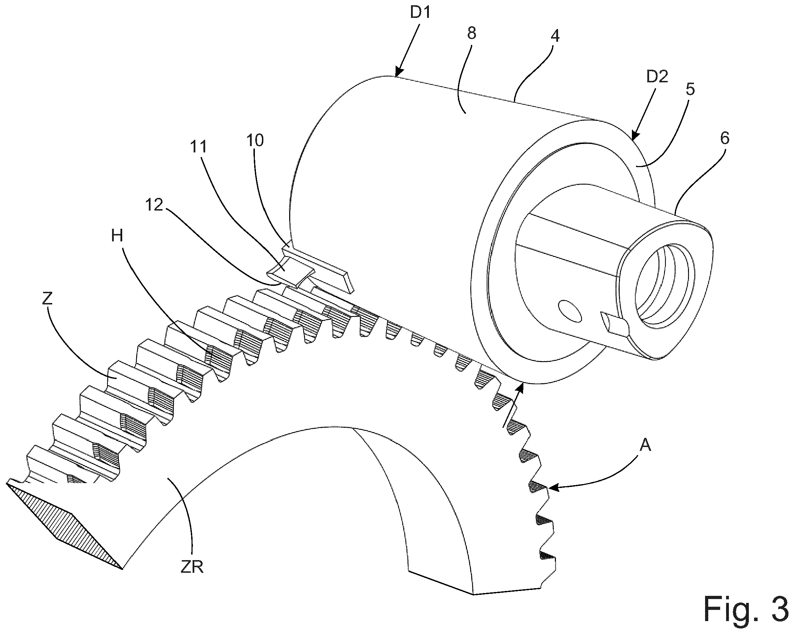

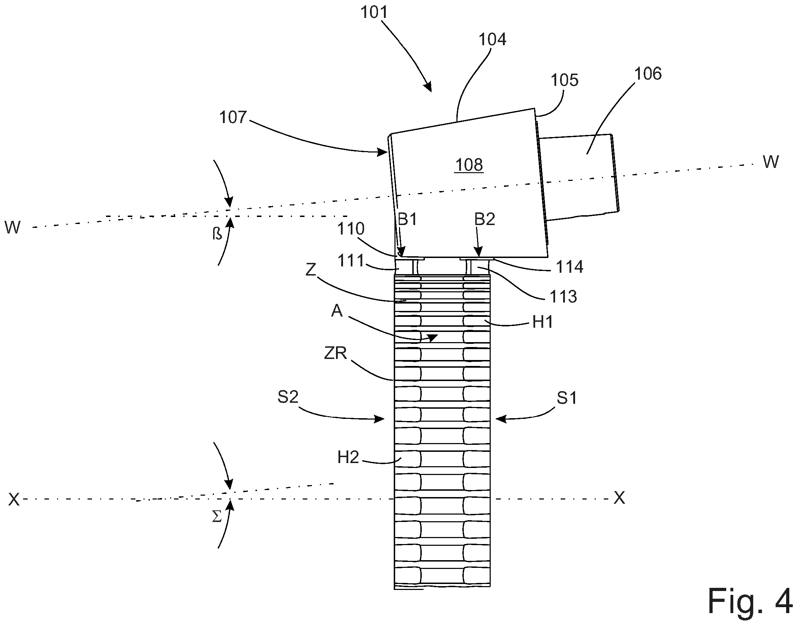

- A: Außenverzahnung des Zahnrads ZR
- B1: Befestigungsposition der Schneidklinge 11 (Fig. 1 bis 3) und der Schneidklinge 111 (Fig. 4)
- B2: Befestigungsposition der zweiten Schneidklinge 113 (Fig. 4)
- D: Durchmesser des Werkzeugschafts 4
- D1: Durchmesser des Werkzeugschafts 4 an seiner Stirnseite 7
- D2: Durchmesser des Werkzeugschafts 4 an dessen Ende 5
- H: Hinterlegung
- H1,H2: Hinterlegungen
- K: jeweilige Kopffläche der Zähne Z
- L: Längsrichtung
- M: die Umfangsfläche 8 erzeugende Mantellinie
- R: radiale Richtung
- S: Abstand
- S1 ,S2: Stirnseiten des zu bearbeitenden Zahnrads ZR
- W: Werkzeugdrehachse
- X: Werkstückdrehachse
- Z: Zähne des Zahnrads ZR
- ZR: Zahnrad

## Patentansprüche

1. Werkzeug zum Erzeugen von Hinterlegungen (H,H1,H2) an einer Innen- oder Außenverzahnung (A) eines Zahnrads (ZR), wobei das im Gebrauch um eine Werkzeugdrehachse (W) rotierende Werkzeug (1,101) einen sich längs der Werkzeugdrehachse (W) erstreckenden Werkzeugschaft (4,104), einen an einem Ende (5,105) des Werkzeugschafts (4,104) ausgebildeten Befestigungsabschnitt (6,106) zum Befestigen des Werkzeugs (1,101) an einem Werkzeugantrieb einer Werkzeugmaschine und mindestens eine Schneidklinge (11,111,113) umfasst, die an einer am Umfang (8,108) des Werkzeugschafts (4,104) vorgesehenen Befestigungsposition (B1,B2) angeordnet ist, **dadurch gekennzeichnet, dass** der in einer normal zur Werkzeugdrehachse (W) ausgerichteten Ebene gemessene Durchmesser (D,D1,D2) des Werkzeugschafts (4,104) ausgehend von dem Durchmesser (D1), den der Werkzeugschaft (4,104) an der Befestigungsposition (B1, B2) der Schneidklinge (11,111,113) hat, in auf den Befestigungsabschnitt (6,106) zu gerichteter Richtung (L) zunimmt.

2. Werkzeug nach Anspruch 1, **dadurch gekennzeichnet, dass** der Abstand der Befestigungsposition (B1) der Schneidklinge (11,111) zur im Gebrauch freien Stirnseite (7,107) des Werkzeugschafts (4,104) kleiner ist als der Abstand (S) der Befestigungsposition (B1) zum an den Befestigungsabschnitt (6,106) angrenzenden Ende (5,105) des Werkzeugschafts (4,104).

3. Werkzeug nach Anspruch 2, **dadurch gekennzeichnet, dass** die Befestigungsposition (B1) der Schneidklinge (11,111) unmittelbar angrenzt an die im Gebrauch freie Stirnseite (7,107) des Werkzeugschafts (4,104).

4. Werkzeug nach einem der Ansprüche 2 oder 3, **dadurch gekennzeichnet, dass** am Umfang (8,108) des Werkzeugschafts (4,104) zwei Befestigungspositionen (B1, B2) für jeweils eine Schneidklinge (111,113) vorgesehen sind und dass von diesen zwei Befestigungspositionen (B1,B2) die erste Befestigungspositionen (B1) gemäß einem der Ansprüche 2 oder 3 angeordnet ist, während die zweite Befestigungsposition (B2) in Längsrichtung (L) des Werkzeugschafts (4,104) in Richtung auf den Befestigungsabschnitt (106) zu beabstandet zu der ersten Befestigungsposition (B1) angeordnet ist.

5. Werkzeug nach Anspruch 4, **dadurch gekennzeichnet, dass** die zweite Befestigungsposition (B2) unmittelbar angrenzt an das dem Befestigungsabschnitt (106) zugeordnete Ende des Werkzeugschafts (104).

6. Werkzeug nach einem der voranstehenden Ansprüche, **dadurch gekennzeichnet, dass** die jeweilige Befestigungsposition (B1,B2) durch eine Aufnahme (9) gebildet und die in der jeweiligen Befestigungsposition (B1) angeordnete Schneidklinge (11,111,113) als Schneideinsatz (10,110) ausgebildet ist, der mit einem Halteabschnitt in der Aufnahme (9) gehalten ist, während eine Schneidklinge (11,111,113) des Schneideinsatzes (10,110,114) in radialer Richtung (R) über den Umfang (8,108) des Werkzeugschafts (4,104) hinaussteht.

7. Werkzeug nach einem der voranstehenden Ansprüche, **dadurch gekennzeichnet, dass** der Durchmesser (D) des Werkzeugschafts (4,104) ausgehend von der Befestigungsposition (B1,B2) der Schneidklinge (11,111,113) in Richtung (L) des dem Befestigungsabschnitt (6,106) zugeordneten Endes (5,105) des Werkzeugschafts (4,104) kontinuierlich zunimmt.

8. Werkzeug nach Anspruch 7, **dadurch gekennzeichnet, dass** der Durchmesser (D) des Werkzeugschafts (4,104) ausgehend von der im Gebrauch freien Stirnfläche (7,107) des Werkzeugschafts (4,104) in Richtung (L) des dem Befestigungsabschnitt (6,106) zugeordneten Endes (5,105) des Werkzeugschafts (4,104) kontinuierlich zunimmt.

9. Werkzeug nach einem der Ansprüche 7 oder 8, **dadurch gekennzeichnet, dass** der Werkzeugschaft (4,104) zum indest abschnittsweise nach Art eines Kegels oder eines Kegelstumpfes geformt ist.

10. Werkzeug nach einem der voranstehenden Ansprüche, **dadurch gekennzeichnet, dass** der Werkzeugschaft (4,104) als massiver Körper gefertigt ist.

11. Verfahren zum Erzeugen von Hinterlegungen (H,H1,H2) an den Zähnen (Z) einer Verzahnung (A) eines Zahnrads (ZR), bei dem mittels mindestens einer Schneidklinge (11,111,113), die am Umfang (8,108) eines Werkzeugschafts (4,104) eines Werkzeugs (1,101) befestigt ist, das um eine längs zum Werkzeugschaft (4,104) ausgerichtete Werkzeugdrehachse (W) rotiert, spanabhebend Werkstoff von den Flanken der Zähne (Z) des um eine Werkstückdrehachse (X) rotierenden Zahnrads (ZR) abgetragen wird, **dadurch gekennzeichnet, dass** das Werkzeug (1,101) gemäß einem der Ansprüche 1 bis 10 ausgebildet ist und dass die Werkzeugdrehachse (W) in Bezug auf die Werkstückdrehachse (X) unter einem Winkel Σ ausgerichtet wird, der größer als 0° ist.

12. Verfahren nach Anspruch 11, **dadurch gekennzeichnet, dass** der Winkel Σ, unter dem die Werkzeugdrehachse (W) und die Werkstückdrehachse (X) in Bezug zueinander winklig angeordnet sind, mindestens gleich einem Winkel β ist, den eine Mantellinie (M), welche an den Werkzeugschaft (4,104) angelegt wird und die Umhüllende des Werkzeugschafts (4,104) abbildet, mit der Werkzeugdrehachse (W) einschließt.

13. Verfahren nach Anspruch **11,dadurch gekennzeichnet, dass** der Winkel β 4° bis 16° beträgt.

14. Verfahren nach einem der Ansprüche 11 oder 12, **dadurch gekennzeichnet, dass** die Schneidklinge (11,111,113) eine mindestens abschnittsweise geradlinig ausgebildete Schneidkante (12) aufweist, die parallel zur Mantellinie (M) ausgerichtet ist, die die den Werkzeugschaft (4,104) Umhüllende erzeugt, und dass der Winkel Σ derart eingestellt ist, dass der geradlinige Abschnitt der Schneidkante (12) im Moment der Begegnung mit dem jeweils zu bearbeitenden Zahn (Z) parallel zur Kopffläche (K) des betreffenden Zahns (Z) des Zahnrads (ZR) ausgerichtet ist.

## Claims

1. Tool for creating back tapers (H, H1, H2) at an internal or external toothing (A) of a gear (ZR), wherein the tool (1, 101) rotating during use about a tool axis of rotation (W) comprises a tool shaft (4, 104) extending along the tool axis of rotation (W), a fastening section (6, 106) for fastening the tool (1, 101) to a tool drive of a machine tool, the fastening section (6, 106) formed at an end (5, 105) of the tool shaft (4, 104), and at least one cutting blade (11, 111, 113), which is arranged at a fastening position (B1, B2) provided at the circumference (8, 108) of the tool shaft (4, 104), **characterised in that** the diameter (D, D1, D2) of the tool shaft (4, 104) measured in a plane oriented normal to the tool axis of rotation (W) increases starting from the diameter (D1), which the tool shaft (4, 104) has at the fastening position (B1, B2) of the cutting blade (11, 111, 113), in a direction (L) directed towards the fastening section (6, 106).

2. Tool according to claim 1, **characterised in that** the distance of the fastening position (B1) of the cutting blade (11, 111) to the front side (7, 107) of the tool shaft (4, 104) that is free during use is smaller than the distance (S) of the fastening position (B1) to the end (5, 105) of the tool shaft (4, 104) adjoining the fastening section (6, 106).

3. Tool according to claim 2, **characterised in that** the fastening position (B1) of the cutting blade (11, 111) directly adjoins the front side (7, 107) of the tool shaft (4, 104) that is free during use.

4. Tool according to any one of claims 2 or 3, **characterised in that** two fastening positions (B1, B2) each for a cutting blade (111, 113) are provided at the circumference (8, 108) of the tool shaft (4, 104) and **in that** of these two fastening positions (B1, B2), the first fastening position (B1) is arranged according to any one of claims 2 or 3, while the second fastening position (B2) is arranged spaced apart from the first fastening position (B1) in a longitudinal direction (L) of the tool shaft (4, 104) in a direction towards the fastening section (106).

5. Tool according to claim 4, **characterised in that** the second fastening position (B2) directly adjoins the end of the tool shaft (104) assigned to the fastening section (106).

6. Tool according to any one of the preceding claims, **characterised in that** the respective fastening position (B1, B2) is formed by a recess (9) and the cutting blade (11, 111, 113) arranged in the respective fastening position (B1) is designed as a cutting insert (10, 110), which is held in the recess (9) with a holding section, while a cutting blade (11, 111, 113) of the cutting insert (10, 110, 114) projects in a radial direction (R) beyond the circumference (8, 108) of the tool shaft (4, 104).

7. Tool according to any one of the preceding claims, **characterised in that** the diameter (D) of the tool shaft (4, 104) continuously increases starting from the fastening position (B1, B2) of the cutting blade (11, 111, 113) in a direction (L) towards the end (5, 105) of the tool shaft (4, 104) assigned to the fastening section (6, 106).

8. Tool according to claim 7, **characterised in that** the diameter (D) of the tool shaft (4, 104) continuously increases starting from the front side (7, 107) of the tool shaft (4, 104) that is free during use in a direction (L) towards the end (5, 105) of the tool shaft (4, 104) assigned to the fastening section (6, 106).

9. Tool according to any one of claims 7 or 8, **characterised in that** the tool shaft (4, 104) is shaped at least in sections in the manner of a cone or a truncated cone.

10. Tool according to any one of the preceding claims, **characterised in that** the tool shaft (4, 104) is manufactured as a massive body.

11. Method for creating back tapers (H, H1, H2) at the teeth (Z) of a toothing (A) of a gear (ZR), in which material is removed by chip removal from the flanks of the teeth (Z) of the gear (ZR) rotating about a workpiece axis of rotation (X) by means of at least one cutting blade (11, 111, 113) fastened at the circumference (8, 108) of a tool shaft (4, 104) of a tool (1, 101) rotating about a tool axis of rotation (W) oriented along the tool shaft (4, 104), **characterised in that** the tool (1, 101) is designed according to any one of claims 1 to 10 and **in that** the tool axis of rotation (W) is oriented with respect to the workpiece axis of rotation (X) at an angle Σ greater than 0°.

12. Method according to claim 11, **characterised in that** the angle Σ, at which the tool axis of rotation (W) and the workpiece axis of rotation (X) are arranged angularly with respect to one another, is at least equal to an angle ß that a surface line (M), which is applied to the tool shaft (4, 104) and forms the enveloping of the tool shaft (4, 104), encloses with the tool axis of rotation (W).

13. Method according to claim 11, **characterised in that** the angle ß is 4° to 16°.

14. Method according to any one of claims 11 or 12, **characterised in that** the cutting blade (11, 111, 113) comprises a cutting edge (12) designed straight-lined at least in sections, which is oriented parallel to the surface line (M), which creates the enveloping of the tool shaft (4, 104), and **in that** the angle Σ is set such that the straight-lined section of the cutting edge (12), at the moment of contact with the tooth (Z) to be machined in each case, is oriented parallel to the head surface (K) of the respective tooth (Z) of the gear (ZR).

## Revendications

1. Outil de création de dépôts (H, H1, H2) sur une denture intérieure ou extérieure (A) d'une roue dentée (ZR), l'outil (1, 101) tournant, en cours d'utilisation, autour d'un axe de rotation d'outil (W) comportant une tige d'outil (4, 104) s'étendant le long de l'axe de rotation d'outil (W), une section de fixation (6, 106) conçue au niveau d'une extrémité (5, 105) de la tige d'outil (4, 104) et permettant de fixer l'outil (1, 101) à un entraînement d'outil d'une machine-outil et au moins une lame de coupe (11, 111, 113) agencée au niveau d'une position de fixation (B1, B2) prévue sur le pourtour (8, 108) de la tige d'outil (4, 104), **caractérisé en ce que** le diamètre (D, D1, D2) de la tige d'outil (4, 104), mesuré dans un plan orienté normalement par rapport à l'axe de rotation de l'outil (W), augmente dans la direction (L) dirigée vers la section de fixation (6, 106) à partir du diamètre (D1) que la tige d'outil (4, 104) présente au niveau de la position de fixation (B1, B2) de la lame de coupe (11, 111, 113).

2. Outil selon la revendication 1, **caractérisé en ce que** la distance entre la position de fixation (B1) de la lame de coupe (11, 111) et la face avant libre (7, 107) en cours d'utilisation de la tige d'outil (4, 104) est inférieure à la distance (S) de la position de fixation (B1) par rapport à l'extrémité (5, 105) de la tige d'outil (4, 104) adjacente à la section de fixation (6, 106).

3. Outil selon la revendication 2, **caractérisé en ce qu** la position de fixation (B1) de la lame de coupe (11, 111) est directement adjacente à la face avant libre (7, 107) en cours d'utilisation de la tige d'outil (4, 104).

4. Outil selon l'une quelconque des revendications 2 ou 3, **caractérisé en ce que** l'on prévoit deux positions de fixation (B1, B2) sur le pourtour (8, 108) de la tige d'outil (4, 104) pour chaque lame de coupe (111, 113) et **en ce que** les premières positions de fixation (B1) sont agencées à partir de ces deux positions de fixation (B1, B2) selon l'une quelconque des revendications 2 ou 3, alors que la deuxième position de fixation (B2) est agencée espacée de la première position de fixation (B1) dans la direction longitudinale (L) de la tige d'outil (4, 104) en direction de la section de fixation (106).

5. Outil selon la revendication 4, **caractérisé en ce que** la deuxième position de fixation (B2) est directement adjacente à l'extrémité de la tige d'outil (104) associée à la section de fixation (106).

6. Outil selon l'une quelconque des revendications précédentes, **caractérisé en ce que** la position de fixation respective (B1, B2) est formée par un logement (9) et la lame de coupe (11, 111, 113) agencée dans la position de fixation (B1) respective est conçue en tant qu'insert de coupe (10, 110) qui est maintenu par une section de maintien dans le logement (9), tandis qu'une lame de coupe (11, 111, 113) de l'insert de coupe (10, 110, 114) dépasse dans la direction radiale (R) au-delà du pourtour (8, 108) de la tige de l'outil (4, 104).

7. Outil selon l'une quelconque des revendications précédentes, **caractérisé en ce que** le diamètre (D) de la tige d'outil (4, 104) augmente de manière continue à partir de la position de fixation (B1, B2) de la lame de coupe (11, 111, 113) dans la direction (L) de l'extrémité (5, 105) de la tige d'outil (4, 104) associée à la section de fixation (6, 106).

8. Outil selon la revendication 7, **caractérisé en ce que** le diamètre (D) de la tige d'outil (4,104) augmente de manière continue à partir de la face avant libre (7, 107) en cours d'utilisation de la tige d'outil (4, 104) dans la direction (L) de l'extrémité (5, 105) de la tige d'outil (4, 104) associée à la section de fixation (6, 106).

9. Outil selon l'une quelconque des revendications 7 ou 8, **caractérisé en ce que** la tige d'outil (4, 104) est formée, au moins par sections, comme un cône ou un cône tronqué.

10. Outil selon l'une quelconque des revendications précédentes, **caractérisé en ce que** la tige d'outil (4, 104) est fabriquée sous forme de corps massif.

11. Procédé de création de dépôts (H, H1, H2) sur les dents (Z) d'une denture (A) d'une roue dentée (ZR) dans lequel, au moyen d'au moins une lame de coupe (11, 111, 113) fixée sur le pourtour (8, 108) d'une tige d'outil (4, 104) d'un outil (1, 101) qui tourne autour d'un axe de rotation d'outil (W) orienté longitudinalement par rapport à la tige d'outil (4, 104), des matériaux sous forme de copeaux sont enlevés des flancs des dents (Z) de la roue dentée (ZR) tournant autour d'un axe de rotation de pièce à usiner (X), **caractérisé en ce que** l'outil (1, 101) est conçu selon l'une des revendications 1 à 10 et **en ce que** l'axe de rotation de l'outil (W) est orienté selon un angle Σ supérieur à 0° par rapport à l'axe de rotation de la pièce à usiner (X).

12. Procédé selon la revendication 11, **caractérisé en ce que** l'angle Σ, sous lequel l'axe de rotation de l'outil (W) et l'axe de rotation de pièce à usiner (X) sont agencés angulairement l'un par rapport à l'autre, est au moins égale à un angle ß formé entre une génératrice (M), qui est appliquée sur la tige d'outil (4, 104) et qui représente l'extrémité enveloppante de la tige d'outil (4, 104), avec l'axe de rotation d'outil (W).

13. Procédé selon la revendication 11, **caractérisé en ce que** l'angle ß est de 4° à 16°.

14. Procédé selon l'une quelconque des revendications 11 ou 12, **caractérisé en ce que** la lame de coupe (11, 111, 113) présente une arête de coupe (12), conçue au moins par sections de façon rectiligne, qui est alignée parallèlement par rapport à la génératrice (M), et qui génère l'extrémité enveloppante de la tige d'outil (4, 104), et **en ce que** l'angle Σ est réglé de telle sorte que la section rectiligne de l'arête de coupe (12), au moment de la rencontre avec la dent (Z) à usiner, est orientée respectivement parallèlement à la surface de tête (K) de la dent concernée (Z) de la roue dentée (ZR).
